# EUROPEAN PATENT SPECIFICATION

(11) **EP 0 598 907 B1**
(45) Date of publication and mention of the grant of the patent: **08.05.1996**
(21) Application number: 92919509.7
(22) Date of filing: 11.09.1992
(51) Int. Cl.: C09K 5/04

(54) **Azeotropic flouroalkane mixtures**
Azeotrope Mischungen von Fluoroalkanen
Azéotrope mélange de fluoroalcane

(30) Priority: 13.09.1991 JP 234850/91
(43) Date of publication of application: 01.06.1994
(73) Proprietor: DAIKIN INDUSTRIES, LIMITED, Osaka-shi Osaka 530 (JP)
(72) Inventor: OMURE, Yukio, Yodogawa Seisakusho Daikinkogyo KK., Settsu-shi, Osaka 566 (JP); NOGUCHI, Masahiro, Yodogawa Seisakusho, Settsu-shi, Osaka 566 (JP); FUJIWARA, Katsuki, Yodogawa Seisakusho, Settsu-shi, Osaka 566 (JP); MOMOTA, Hiroshi, Yodogawa Seisakusho, Settsu-shi, Osaka 566 (JP)
(74) Representative: Schüler, Horst, Dr.
(86) International application number: JP9201160
(87) International publication number: WO9306186

(56) References cited:
- JP-A- 3 287 688
- PATENT ABSTRACTS OF JAPAN, vol. 015, no. 413, 22 October 1991

## Description

### Technical Field

The present invention relates to a fluoroalkane composition which is of use as a refrigerant, among others.

### Background Art

As the working fluid or refrigerant, chlorofluoroalkanes, azeotropic mixtures thereof, and compositions analogous thereto are known. Among them, CFC11(trichlorofluoromethane), CFC12(dichlorodifluoromethane), CFC114(1,2-dichloro-1,1,2,2-tetrafluoroethane) and HCFC22(chlorodifluoromethane) have been used commonly as refrigerator working fluids. However, once released into the atmosphere, these chlorofluoroalkanes ascend to the stratosphere in intact form because of their stability against decomposition and generate Cℓ radicals there to destroy the ozone layer of the stratosphere to inflict serious damages on the earth ecology including man. Therefore, the use and production of these ozone-unfriendly chlorofluoroalkanes have come to be restricted by international conventions. Among the chlorofluoroalkanes subject to control are CFC11, CFC12 and CFC114.

Of the above chlorofluoroalkanes, HCFC22 is not subject to control today because of its fairly low ozone depleting potentials (hereinafter referred to briefly as ODP) as compared with the controlled substances mentioned just above (e.g. about 1/20 compared with CFC11) but it is generally hoped that this compound, too, will be ultimately replaced with compounds having an ODP value of zero.

With the popular use of air conditioning-refrigeration equipment, any restriction on the use and production of the refrigerant, the demand for which is increasing year by year, would have significant impacts on all the social systems from the living environment to the storage and transportation of food. Therefore, a true and urgent need is being felt for the development of new refrigerants either without or with only a drastically reduced potential to cause the above-mentioned problem of ozone depletion.

As compounds promising to be useful substitutes for the above-mentioned chlorofluoroalkanes (hereinafter referred to as alternative candidate substitute compounds), there are known several hydrogen-containing chlorofluoroalkanes and fluoroalkanes, such as HFC21 (dichloromonofluoromethane), HFC23(trifluoromethane), HFC32(difluoromethane), HFC 124(monochlorotetra fluoromethane), HFC125(pentafluoroethane), HCFC133a (monochlorotrifluoroethane), HFC134a(tetrafluoroethane), HCFC142b(monochlorodifluoroethane) and HFC143a(trifluoroethane).

However, any of these alternative candidate substitute compounds cannot independently satisfy all the performance requirements of a refrigerant, in terms of ODP, non-inflammability and so on.

Therefore, it might be contemplated with reason to use two or more of them in combination. However, when an uncosidered simple mixture of them is used as the refrigerant, a change in composition due to change of phase, i.e. evaporation and condensation, in the heat exchanger is unavoidable so that the operation reliability of the refrigeration equipment cannot be insured.

By way of example, the official gazette JP Kokai S-64-79199 discloses a binary mixture of HFC143a and either HFC124 or HFC134. However, this binary system has disadvantages, viz. (A) because it contains chlorine, its ODP is not equal to zero; (B) because it does not form an azeotrope, the above-mentioned change in composition due to change of phase is inevitable, and (C) the refrigerating effect is inadequate.

Patent Abstract of Japan, vol 015, no.413, 22.10.91 discloses a ternary or higher blend comprising at most 60 wt% difluoromethane, at most 80 wt% trifluoroethane and 20-80 wt% tetrafluoroethane. Patent Abstract of Japan, vol 015, no 413, 22.10.91 discloses a ternary blend comprising at most 60 wt% difluoromethane, at most 80 wt% trifluoroethane and 20-65 wt% difluoroethane.

The specification of US Patent 4,978,467 discloses a binary system of HFC32 and HFC125. However, compared with HCFC22 which has heretofore been used prevalently as the refrigerant, this system has only a low coefficient of performance which requires improvement.

Aside from the above systems, the following azeotropic systems are known.
R500 ... CFC12/HFC152a = 78.3/26.2 weight %
R502 ... HCFC22/CFC115 = 48.8/51.2 weight %
R503 ... CFC13/HFC23 = 59.9/40.1 weight %
R504 ... HFC32/CFC115 = 48.2/51.8 weight %
However, since they contain chlorine, the trend is that the use of these refrigerants will also be restricted in not a too distant future.

### Disclosure of Invention

The primary object of the present invention is to provide a refrigerant composition featuring an ODP value of zero, yet having excellent refrigering properties and being substantially free of the above-mentioned change in composition associated with a change of phase in the running of machinery.

The inventor of the present invention has been engaged in intensive research with the eye set on the foregoing state of the art. As a result, the inventor discovered that a mixture of difluoromethane and 1,1,1-trifluoroethane has qualities required to accomplish the above-mentioned object.

The present invention, thus, provides the following compositions.

The composition comprising an azeotrope-like mixture of 70 to 95 mole % of difluoromethane and 30 to 5 mole % of 1,1,1-trifluoroethane.

The composition as mentioned in paragraph 1 comprising an azeotrope-like mixture of 89 to 93 mole % of difluoromethane and 11 to 7 mole % of 1,1,1-trifluoroethane.

Since, for all practical purposes, an azeotrope-like composition can be dealt with in the same manner as an azeotropic mixture, any azeotrope is mentioned as an azeotrope-like composition in this specification.

The main physical properties of difluoromethane (hereinafter referred to as HFC32) and 1,1,1-trifluoroethane (hereinafter referred to as HFC143a), which are used in the present invention, and the main physical properties of the minimum-boiling azeotropic mixture of the two compounds are presented below in Table 1.

**Table 1**

| | HFC-32 | HFC-143a | HFC-32/HFC-143a |
|---|---|---|---|
| Fractional composition (mole %) | - | - | 91/9 |
| Molecular weight | 52 | 84 | 55 |
| Boiling point (°C) | -51.8 | -47.6 | -52 |
| Critical temperature (°C) | 78.4 | 73.1 | 78 |
| Liquid density (g/cc) | 1.21 | 1.18 | 1.20 |
| O₃ depleting potentials | 0 | 0 | 0 |

The composition of the present invention is generally provided in an HFC32:HFC143a ratio of 5 through 95:95 through 5 (mole % ratio). In the case of a composition containing less than 5 mole % of HFC32, the characteristically high refrigerating capacity and efficiency of HFC32 will not be fully exploited. On the other hand, if the proportion of HFC32 exceeds 95 mole %, the temperature of compressor discharge gas will be too high.

The preferred HFC32:HFC143a ratio of the composition of the present invention is 70 through 95:30 through 5 (mole %). It has been found that this composition can be advantageously used as the refrigerant in much the same manner as the azeotrope-like composition.

The more advantageous HFC32:HFC143a ratio for the composition of the invention is 89 through 93:11 through 7 (mole %). This composition exhibits still superior properties as an azeotrope-like mixture and as such is very useful for all practical purposes.

Moreover, this composition is non-inflammable under the Pressurized Gas Control Law and is, therefore, further more satisfactory.

Where necessary, stabilizers can be incorporated in the composition of the invention. Thus, where a high degree of stability is required for rugged conditions of service, the following and other stabilizers can be added in a proportion of about 0.01 to 5% of the weight of the mixture; viz. epoxides such as propylene oxide, 1,2-butylene oxide, glycidol, etc., phosphites such as dimethyl phosphite, diisopropyl phosphite, diphenyl phosphite, etc., thiophosphites such as trilauryl trithiophosphite etc., phosphine sulfates such as triphenoxyphosphine sulfite, trimethylphosphine sulfite, etc., boron compounds such as boric acid, triethyl borate, triphenyl borate, phenylboric acid, diphenylboric acid, etc., phenols such as 2,6-di-tert-butyl-p-cresol etc., nitroalkanes such as nitromethane, nitroethane, etc., acrylic acid esters such as methyl acrylate, ethyl acrylate, etc., dioxane, tert-butanol, pentaerythritol, p-isopropenyltoluene and so on.

Furthermore, within the range not affecting the object and effects of the present invention, other compounds can be added to the mixture of the invention. Among such other compounds can be reckoned ethers such as dimethyl ether, pentafluorodimethylether, etc., amines such as perfluoroethylamine etc., and LPG.

### Effects of Invention

The composition of the invention is easily decomposed and does not contain chlorine which might affect the ozone layer so that it has no ozone depleting potentials, viz. ODP=zero.

The composition of the invention insures a high refrigerating capacity with a comparatively high coefficient of performance. For example, an azeotrope of HFC32:HFC143a=91:9 (mole %) has a refrigerating effect equal to 1.5 times that of HCF22 and a coefficient of performance equal to 91% relative to HCF22, thus being a globally useful refrigerant.

The azeotrope offers advantages in liquid control and recovery-reuse.

The composition of the present invention is only sparingly solubilizing high molecular compounds, so that the existing refrigerators can be used as they are without need for change in the structural materials.

Except at high concentrations of HFC-143a, the composition is highly compatible with PAG(polyalkylene glycol) oil, polyester oil and other refrigerating machine oils.

The composition of the invention has excellent thermal stability, too.

The composition of the invention is not only of use as a refrigerant but can be used with advantage as a propellant, a blowing agent for the production of foamed articles of polyolefins such as polyethylene, polypropylene, polystyrene, etc. or polyurethane foams or as a working fluid for reclaiming waste heat from low-temperature heat sources.

### Brief Description of the Drawings

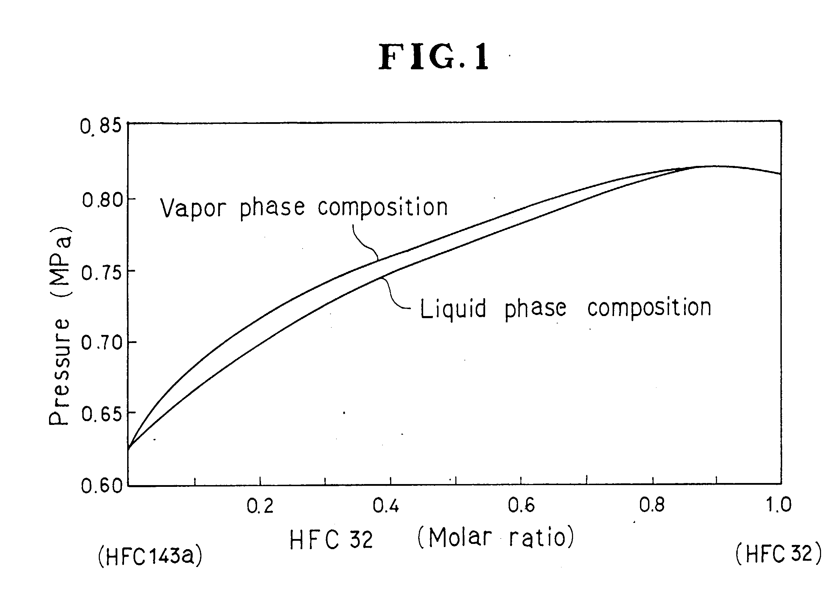

Fig. 1 is a graph showing the molar compositions of the minimum boiling azeotropic mixture and azeotrope-like composition of the invention.

### Best Mode for Practicing the Invention

The following examples and comparative examples are intended to point out the characteristic features of the invention with further clarity.

### Example 1

For a mixture of HFC32 and HFC143a, the relative amounts of the respective components in the vapor phase and liquid phase at equilibrium at 0°C were determined as follows. Thus, a sample of the mixture was sealed in a pressure-resistant container and using a circulating pump, the sample was sufficiently agitated for transition from vapor phase to liquid phase and from vapor phase to gas phase. The compositions of the vapor phase and of the liquid phase were analyzed by gas chromatography and, at the same time, the corresponding pressure was determined.

The results are shown in Fig. 1. It can be seen that the vapor phase and liquid phase were substantially identical in composition within the range of 89-93 mole % of HFC32 and 11-7 mole % of HFC143a and that the minimum boiling azeotrope occurred at about 91 mole % of HFC32 and about 9 mole % of HFC143a.

### Example 2

Using a mixture of HFC32 and HFC143a as the mixed refrigerant, a 1-HP refrigerator was operated at the vaporization temperature of 0°C and condensation temperature of 50°C, the compressor inlet superheating temperature of 5°C and the condenser exit supercooling temperature of 0°C. The difference in composition between the vapor and liquid phases was determined by gas chromatography using samples of the vapor and liquid phases of the refrigerant in the condenser.

As the refrigerating machine oil, polyalkylene glycol was used.

Table 2 sets forth the fractional composition (mole %), coefficient of performance (COP), refrigerating capacity [kcal/m³], compressor gas discharge temperature (°C) and vapor-liquid composition difference (mole %). The composition of 91.0 mole % of HFC32 and 9.0 mole % of HFC 143a is the azeotrope described in Example 1.

Reference data on HCFC22 are also presented in Table 2.

**Table 2**

| Fractional composition (mole %) | | COP | Refrigerating capacity (kcal/m³) | Compressor gas discharge temperature (°C) | Gas-liquid composition difference (mole %) |
|---|---|---|---|---|---|
| HFC-32 | HFC-143a | | | | |
| 0.0 | 100.0 | 3.55 | 708.6 | 63.0 | 0.000 |
| 10.0 | 90.0 | 3.53 | 743.6 | 65.3 | 0.021 |
| 20.0 | 80.0 | 3.52 | 780.7 | 67.6 | 0.035 |
| 30.0 | 70.0 | 3.52 | 819.7 | 70.0 | 0.043 |
| 40.0 | 60.0 | 3.53 | 861.6 | 72.6 | 0.045 |
| 50.0 | 50.0 | 3.55 | 905.7 | 75.5 | 0.043 |
| 60.0 | 40.0 | 3.58 | 952.9 | 78.6 | 0.036 |
| 70.0 | 30.0 | 3.63 | 1002.3 | 82.2 | 0.027 |
| 80.0 | 20.0 | 3.70 | 1053.0 | 86.4 | 0.016 |
| 90.0 | 10.0 | 3.77 | 1103.7 | 91.5 | 0.006 |
| 91.0 | 9.0 | 3.78 | 1108.7 | 92.0 | 0.005 |
| 100.0 | 0.0 | 3.86 | 1152.7 | 97.6 | 0.000 |
| (HCFC22) | | 4.17 | 732.8 | 76.4 | 0.000 |

It will be apparent from Table 2 that the refrigerant according to the present invention is particularly excellent in refrigerating capacity and, moreover, is globally well-balanced in characteristics.

## Claims

1. The composition comprising an azeotrope-like mixture of 70 to 95 mole % of difluoromethane and 30 to 5 mole % of 1,1,1-trifluoroethane.

2. The composition of claim 1 comprising an azeotrope-like mixture of 89 to 93 mole % of difluoromethane and 11 to 7 mole % of 1,1,1-trifluoroethane.

3. The refrigerating machine employing a refrigerant composition comprising an azeotrope-like mixture of 70 to 95 mole % of difluoromethane and 30 to 5 mole % of 1,1,1-trifluoroethane.

4. The refrigerating machine of claim 3 employing a refrigerant composition comprising an azeotrope-like mixture of 89 to 93 mole % of difluoromethane and 11 to 7 mole % of 1,1,1-trifluoroethane.

## Patentansprüche

1. Zusammensetzung, die ein azeotropartiges Gemisch aus 70 bis 95 Mol-% Difluormethan und 30 bis 5 Mol-% 1,1,1-Trifluorethan umfaßt.

2. Zusammensetzung nach Anspruch 1, die ein azeotropartiges Gemisch aus 89 bis 93 Mol-% Difluormethan und 11 bis 7 Mol-% 1,1,1-Trifluorethan umfaßt.

3. Kältemaschine, bei der eine Kältemittelzusammensetzung verwendet wird, die ein azeotropartiges Gemisch aus 70 bis 95 Mol-% Difluormethan und 30 bis 5 Mol-% 1,1,1-Trifluorethan umfaßt.

4. Kältemaschine nach Anspruch 3, bei der eine Kältemittelzusammensetzung verwendet wird, die ein azeotropartiges Gemisch aus 89 bis 93 Mol-% Difluormethan und 11 bis 7 Mol-% 1,1,1-Trifluorethan umfaßt.

## Revendications

1. Composition comprenant un mélange ressemblant à un azéotrope de 70 à 95% en moles de difluorométhane et de 30 à 5% en moles de 1,1,1-trifluoroéthane.

2. Composition suivant la revendication 1, comprenant un mélange ressemblant à un azéotrope de 89 à 93% en moles de difluorométhane et de 11 à 7% en moles de 1,1,1-trifluoroéthane.

3. Machine réfrigérante employant une composition réfrigérante comprenant un mélange ressemblant à un azéotrope de 70 à 95% en moles de difluorométhane et de 30 à 5% en moles de 1,1,1-trifluoroéthane.

4. Machine réfrigérante suivant la revendication 3, employant une composition réfrigérante comprenant un mélange ressemblant à un azéotrope de 89 à 93% en moles de difluorométhane et de 11 à 7% en moles de 1,1,1-trifluoroéthane.
